**Europäisches Patentamt**

**European Patent Office**

**Office européen des brevets**

(11) Publication number: **0 142 430**
**A2**

(12) **EUROPEAN PATENT APPLICATION**

(21) Application number: **84402233.5**

(22) Date of filing: **07.11.84**

(51) Int. Cl.⁴: **A 01 K 1/02**
**A 01 K 1/035**

(30) Priority: **08.11.83 ES 275588**

(43) Date of publication of application:
**22.05.85 Bulletin 85/21**

(84) Designated Contracting States:
**AT BE CH DE FR GB IT LI LU NL SE**

(71) Applicant: **Larraga Moncayola, José**
**Pano y Ruata Street No. 4**
**Zaragoza(ES)**

(72) Inventor: **Larraga Moncayola, José**
**Pano y Ruata Street No. 4**
**Zaragoza(ES)**

(74) Representative: **Chameroy, Claude et al,**
**c/o Cabinet Malemont 42, avenue du Président Wilson**
**F-75116 Paris(FR)**

(54) **Thermic bed for pigs.**

(57) A thermic bed for pigs, characterised in that such bed is constituted of a monopiece body, preferably of glass fiber, forming a sort of cage for raising pigs, composed of three surfaces, incorporating an electric wiring (8), integrated by corresponding inner heat radiating walls to create in said place a comfort for protecting the pigs from disagreeable temperature, said thermic bed being provided with a programmer (4), ensuring at each moment the right temperature, a disconnection device, working automatically, once attained the desired comfort conditions, as well as lighting elements (6) for connection and disconnection.

FIG.2

EP 0 142 430 A2

## THERMIC BED FOR PIGS

The present invention deals with a thermic bed for pigs.

More concretely the invention relates to a thermic bed specially ideated for breeding purposes of pigs, showing remarkable advantages, as for instance the fact to obtain a complete heating system, designed and conceived for achieving a big thermic yield, with a very low power consumption.

The bed as proclaimed comprises an enclosed place formed by three heat radiating surfaces for raising the pigs under artificial heat, conveniently protected from more disagreeable temperatures. The special design of the mentioned bed allows as well a great visibility and its reduced weight makes it easy to be cleaned.

The thermic bed is programmed by an operation control, ensuring at each moment the right temperature, getting disconnected automatically once attained the comfort of the pigs in their place, incorporating a pilot lighting for connection and disconnection.

In the upper part, the thermic bed is provided with a light shade to better assist pigs, facilitating a larger control during night, without being necessary to connect lighting.

In order to facilitate the explanation of this invention, a sheet of drawing is attached, illustrating one case of realization as an example.

In the drawings:

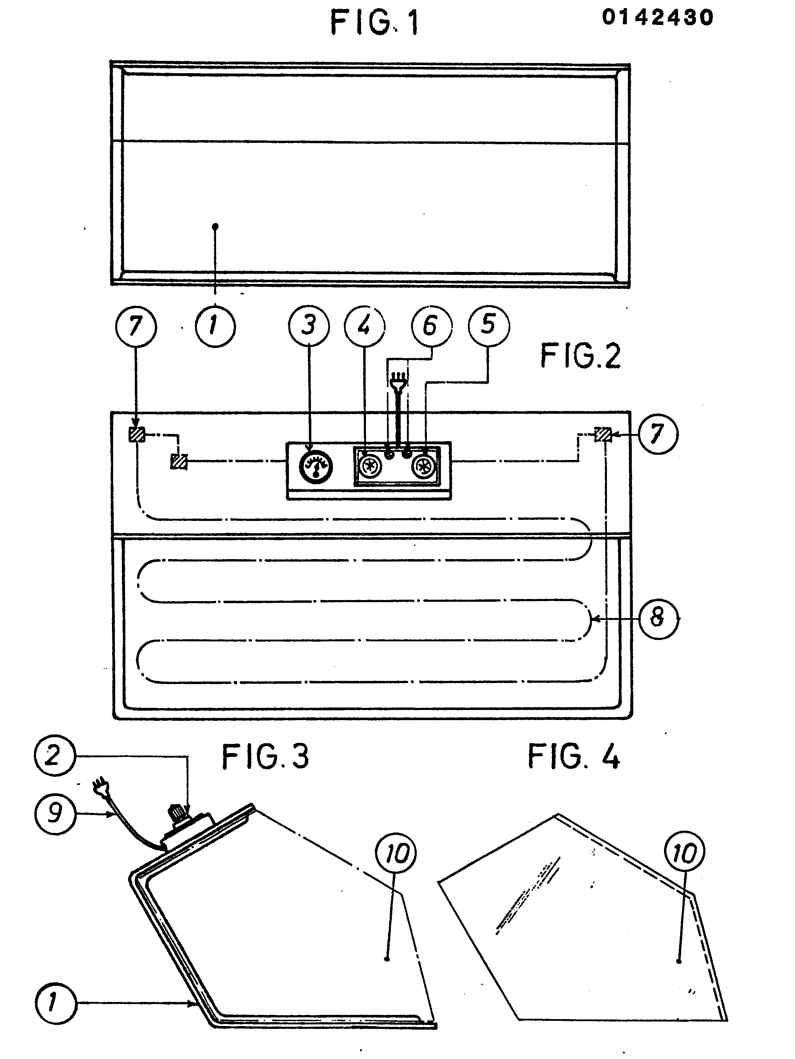

Figure 1 illustrates an elevation view of the thermic bed.

Figure 2 illustrates a plan view as to the former figure.

Figure 3 is a side view of the mentioned thermic bed.

Figure 4 is a side view of the optional protector.

With reference to the drawings, in its realization there can be appreciated a thermic bed formed by a main body 1, provided with control elements 2, with a temperature regulator 3, a thermostat 4, a starting switch 5 and pilot lighting 6 for connection and disconnection.

Number 7 indicates the plugs for connecting wires, 8 shows the inner electric wiring scheme for heating; 9 the connection cable and 10 an optional protector.

This invention, within its essentiality can also be realizsed under other forms differing from the one hereunder specified as an example. Therefore the invention can be constructed in any form and size with the most suitable materials being all this within the scope of the following claims.

0142430

CLAIMS

1. A thermic bed for pigs, characterised in that such bed is constituted of a monopiece body (1), preferably of glass fiber, forming a sort of cage for raising pigs, composed of three surfaces, incorporating an electric wiring (8), integrated by corresponding inner heat radiating walls to create in said place a comfort for protecting the pigs from disagreeable temperature, said thermic bed being provided with a programmer (4), ensuring at each moment the right temperature, a disconnection device, working automatically, once attained the desired comfort conditions, as well as lighting elements (6) for connection and disconnection.

2. A bed according to claim 1, characterised by comprising an independant protecting device, formed by a screen (10) of transparent material eventually associated to the bed, closing the place configurated by the same.

07·01·85

0142430

FIG.1

FIG.2

FIG.3

FIG. 4